# DEMANDE DE BREVET EUROPEEN

(11) **EP 2 653 633 A1**
(43) Date de publication de la demande: **23.10.2013**
(21) Numéro de dépôt: 13161912.4
(22) Date de dépôt: 02.04.2013
(51) Int. Cl.: E04D 13/17, F24J 2/04

(54) **Système de récuperation des apports solaires sur une toiture traditionnelle en pente**

(30) Priorité: 18.04.2012 FR 1253588
(71) Demandeur: Terreal, 92150 Suresnes (FR)
(72) Inventeur: Lemercier, Hervé, 11400 Castelnaudary (FR); Weiland, Eric, 11150 Villasavary (FR); Richard, Nicolas, 11400 Peyrens (FR)
(74) Mandataire: Laget, Jean-Loup

(57) **Abrégé**

Système de récupération des apports solaires sur une toiture traditionnelle en pente comportant des éléments de couverture (5) et un écran de sous-toiture (2).

Un écran intermédiaire (16) délimite d'une part un espace de circulation d'air au dessous des éléments de couverture, d'autre part un espace d'aspiration d'air au dessus de l'écran de sous-toiture.

## Description

L'invention concerne un système de récupération des apports solaires, sur une toiture traditionnelle en pente comportant des chevrons, un écran de sous-toiture, des contre-liteaux maintenant l'écran de sous-toiture sur les chevrons, des liteaux perpendiculaires aux chevrons et contre-liteaux, et des éléments de couverture. Les éléments de couverture peuvent être de petite taille ou de grande taille, et constitués par exemple de tuiles en terre cuite, tuiles en béton, ardoises, lauze ou bardeaux métalliques.

Le document US 7 231 744 décrit un système de ventilation de toit métallique consistant à placer une deuxième couverture au dessus de la première, avec des entretoises entre les deux pour créer un passage d'air. L'air est pompé pour une utilisation domestique ou industrielle. Une telle disposition exige un doublage de la couverture du bâtiment. Elle n'est envisageable que pour un bâtiment à couverture métallique et en aucun cas pour une couverture de toit traditionnelle.

Le document US 2011/0209849 décrit un toit dont les éléments de couverture sont remplacés par des panneaux photovoltaïques. Entre les panneaux photovoltaïques et un écran de sous-toiture, l'espace est parcouru par un courant d'air forcé, qui est repris au sommet du toit, envoyé à un mélangeur d'air et ensuite à une pompe à chaleur.

Le document WO 2011/116035 décrit une toiture traditionnelle en pente au dessus de laquelle sont montés des panneaux photovoltaïques. L'espace entre les éléments de couverture et les panneaux photovoltaïques est parcouru par de l'air qui s'échauffe sous les panneaux, par échange thermique avec les panneaux. L'air chaud est collecté au sommet du toit et acheminé vers une pompe à chaleur. Dans cette toiture, l'espace entre les éléments de couverture et un écran de sous-toiture est parcouru par de l'air qui n'est pas utilisé.

Le document DE 199 02 650 décrit une couverture formée de panneaux photovoltaïques et non d'éléments de couverture obligatoirement soumis à une ventilation naturelle. La circulation d'air de récupération de chaleur se fait selon la ligne de pente du toit. Dans une première variante, la circulation d'air se fait du bord du toit vers l'arête du toit. Dans une deuxième variante, la circulation d'air se fait d'abord de l'arête du toit vers le bord du toit, puis, après un demi-tour, du bord du toit vers l'arête du toit. Le prélèvement d'air chaud se fait toujours à l'arête du toit, et l'air circule dans des canaux continus.

Le document FR 2-515-323 décrit une toiture avec espace entre l'écran de sous-toiture et les éléments de couverture. Dans cet espace est disposée une gaine tubulaire, placée entre deux liteaux et reliée à une conduite pour acheminer l'air chaud à une installation de récupération. La paroi supérieure de la gaine délimite un espace sous les éléments de couverture et un espace au-dessus de l'écran de sous-toiture. Mais la paroi supérieure de la gaine est munie d'ouvertures pour faire communiquer les deux espaces et pour assurer une ventilation forcée sous les éléments de couverture avant aspiration dans la conduite.

Un but de l'invention est de proposer un système de récupération des apports solaires sur une toiture traditionnelle en pente, qui respecte l'aspect extérieur de la toiture.

Un autre but de l'invention est de proposer un système de récupération des apports solaires sur une toiture traditionnelle en pente, qui puisse être installé par le couvreur, sans recours à des spécialistes d'une autre technique.

L'invention a pour objet un système de récupération des apports solaires, sur une toiture traditionnelle en pente comportant des chevrons, un écran de sous-toiture, des contre-liteaux maintenant l'écran de sous-toiture sur les chevrons, des liteaux perpendiculaires aux chevrons et aux contre-liteaux, et des éléments de couverture ; le système de récupération des apports solaires comprenant au moins une gaine d'aspiration débouchant dans un orifice de l'écran de sous-toiture et aboutissant à une installation de récupération de chaleur, caractérisé en ce qu'il comporte, entre l'écran de sous-toiture et les éléments de couverture, un écran intermédiaire présentant une surface sensiblement continue et étanche, et délimitant d'une part, un espace de circulation d'air au dessous des éléments de couverture pour assurer la ventilation naturelle des éléments de couverture, et d'autre part, un espace d'aspiration d'air au dessus de l'écran de sous-toiture pour assurer la circulation d'air chauffé depuis les bords de l'écran intermédiaire jusqu'à l'orifice dans l'écran de sous-toiture.

Avantageusement, l'écran intermédiaire s'étend au moins sous une partie des éléments de couverture.

De préférence, ladite au moins une gaine d'aspiration débouche dans l'orifice de l'écran de sous-toiture en regard de l'écran intermédiaire.

De manière avantageuse, l'écran intermédiaire est en matériau conducteur et participe au chauffage de l'air pendant son trajet depuis le bord de l'écran intermédiaire jusqu'à l'orifice de l'écran de sous-toiture.

Avantageusement, l'écran intermédiaire est constitué d'éléments fixés aux liteaux et s'appuyant sur les contre-liteaux.

De préférence, les éléments constitutifs de l'écran intermédiaire présentent un relief pour assurer une turbulence de l'air aspiré par la gaine, pour favoriser l'échange thermique entre l'air aspiré et l'écran intermédiaire.

De préférence, l'installation de récupération de chaleur est logée sous la toiture.

De manière avantageuse, entre l'espace d'aspiration et l'installation de récupération de chaleur est disposé un clapet anti-retour piloté pour contrôler le débit d'air chaud aspiré.

D'autres caractéristiques et avantages de l'invention ressortent de la description qui suit faite avec référence aux dessins annexés dans lesquels :
- La figure 1 est une vue en perspective de dessus d'une toiture traditionnelle en pente avant mise en place des éléments de couverture, montrant un premier exemple de réalisation de l'écran intermédiaire ;
- La figure 2 est une vue analogue à celle de la figure 1 en l'absence d'écran intermédiaire ;
- La figure 3 est une vue en perspective de dessus analogue à la figure 1 en présence d'éléments de couverture ;
- La figure 4 est une vue en perspective de dessus d'une toiture traditionnelle en pente montrant un deuxième exemple de réalisation de l'écran intermédiaire.

A titre d'exemple, la toiture traditionnelle en pente d'une maison individuelle est celle qui bénéficie le plus des apports solaires, en raison de sa grande surface et de son orientation favorable à l'ensoleillement.

En condition favorable d'ensoleillement, la température des tuiles en terre cuite peut être supérieure à la température de l'air extérieur, de plus de 10° C l'hiver, et de plus de 30° C l'été. La couverture en terre cuite est une source de calories exploitable pour la performance énergétique du bâtiment.

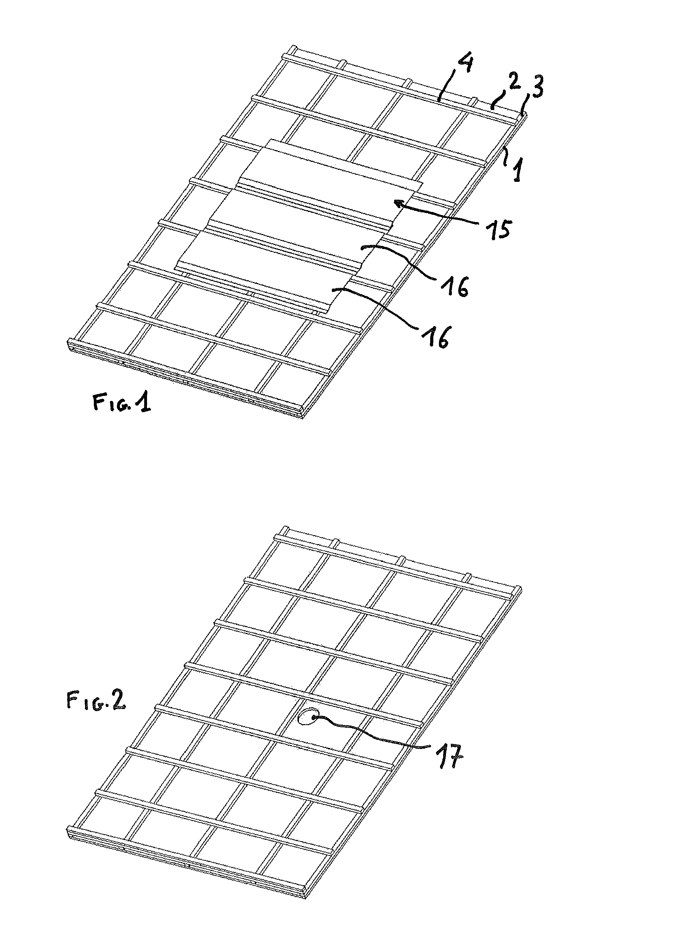

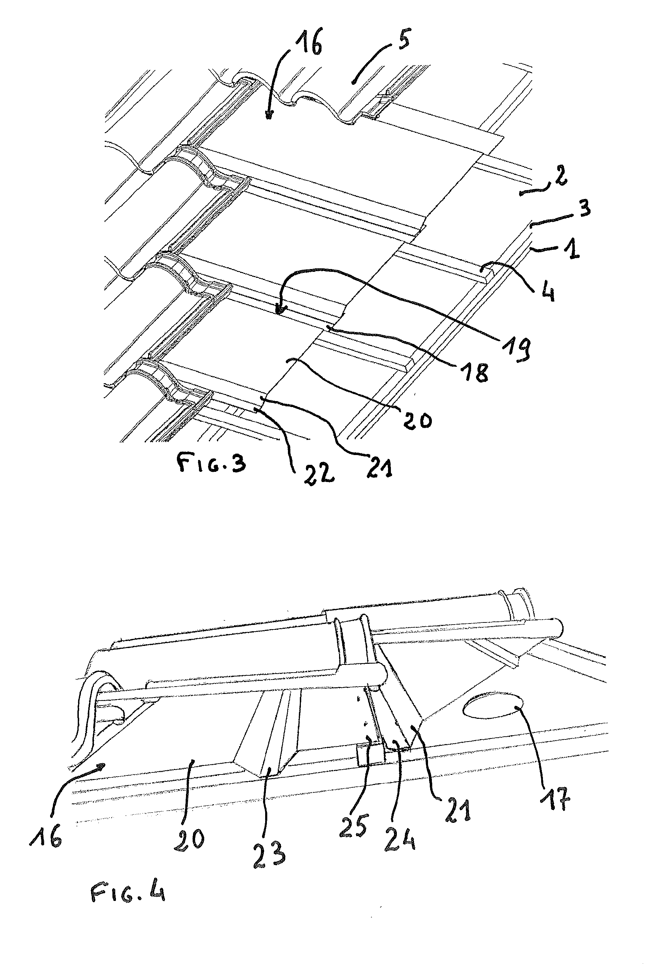

En référence aux figures 1 et 3, une toiture traditionnelle en pente organisée pour la mise en oeuvre du système de récupération des apports solaires, a une structure ci-après décrite du bas vers le haut. Sur les chevrons 1 est disposé un écran 2 de sous-toiture, maintenu sur les chevrons 1 par des contre-liteaux 3 superposés aux chevrons 1, selon la ligne de pente de la toiture. Entre les chevrons 1 et sous l'écran 2 de sous-toiture est prévu un isolant, non représenté. Perpendiculairement aux contre-liteaux 3 sont fixés des liteaux 4 qui portent les éléments de couverture 5, tels que des tuiles et accessoires. Ainsi, entre l'écran 2 de sous-toiture et les éléments de couverture 5 se développe une lame d'air dont l'épaisseur correspond à la hauteur des contre-liteaux 3 et des liteaux 4. Cette lame d'air est préchauffée par les éléments de couverture 5.

Sur la figure 1, l'écran de sous-toiture 2 est maintenu entre les chevrons 1 et les contre-liteaux 3. Les liteaux 4 sont perpendiculaires aux contre-liteaux 3. Un écran intermédiaire 15 est disposé sur les liteaux 4, et s'étend au moins sous une partie des éléments de couverture (non représentés). L'écran intermédiaire 15 peut s'étendre sous la totalité des éléments de couverture ; il est constitué d'éléments 16 d'écran intermédiaire. En regard de l'écran intermédiaire 15, l'écran de sous-toiture 2 présente un orifice 17 (figure 2) dans lequel débouche une gaine d'aspiration 9.

Chaque élément 16 d'écran intermédiaire est posé sur un liteau 4 auquel il est fixé, et il s'appuie sur des contre-liteaux 3. Selon le premier exemple de réalisation, chaque élément 16 d'écran intermédiaire comprend, du haut vers le bas selon la ligne de pente du toit (figure 3) : une bande 18, en appui sur des contre-liteaux 3 ; un front montant 19, appliqué contre un liteau 4 ; une face 20, en appui sur le liteau 4 ; un pan oblique 21 ; et une bandelette 22 en appui sur des contre-liteaux 3. Le front montant 19 ou la face 20 peuvent être fixés au liteau 4 au moyen de clous ou de vis. De la même manière que les éléments de couverture 5, les éléments 16 d'écran intermédiaire sont mis en place du bas vers le haut du pan de toit. Ainsi la bandelette 22 d'un élément 16 d'écran intermédiaire repose sur la bande 18 de l'élément 16 inférieur, de sorte que l'écran intermédiaire 15 présente une surface sensiblement continue et étanche.

Les éléments de couverture 5 sont posés sur les liteaux 4, où ils sont en contact ponctuel avec les éléments 16 d'écran intermédiaire. Ainsi, entre les éléments de couverture 5 et l'écran de sous-toiture 2, l'écran intermédiaire 15 délimite d'une part un espace de circulation d'air au dessous des éléments de couverture 5, et d'autre part un espace d'aspiration d'air au dessus de l'écran de sous-toiture 2. L'espace de circulation d'air entre l'écran intermédiaire 15 et les éléments de couverture 5 assure le respect de l'obligation de ventilation naturelle des éléments de couverture 5. L'espace d'aspiration d'air entre l'écran intermédiaire 15 et l'écran de sous-toiture 2 assure la circulation d'air chauffé depuis les bords de l'écran intermédiaire 15 jusqu'à l'orifice 17 dans l'écran de sous-toiture 2 où se situe l'entrée de la gaine d'aspiration 9. Entre l'espace de circulation d'air et l'espace d'aspiration d'air, l'écran intermédiaire constitue une séparation sensiblement étanche.

Dans le deuxième exemple de réalisation de l'écran intermédiaire 15 (figure 4), chaque élément 16 d'écran intermédiaire est placé entre un liteau inférieur et un liteau supérieur, par rapport à la ligne de pente du toit. Chaque élément 16 d'écran intermédiaire présente une face 20 dans laquelle est disposée une rainure 23 en forme de gouttière, parallèle aux liteaux 4, et constituant un relief dans l'espace d'aspiration d'air, pour provoquer une turbulence au passage de l'air aspiré par la gaine 9. Le bord supérieur 25 de la face 20 est fixé sur le liteau supérieur au moyen de clous ou de vis. Le bord inférieur de la face 20 se prolonge par un pan oblique 21 et une bande cintrée 24, dont le bord libre, relevé, est en appui sur le liteau inférieur. Ainsi, un liteau 4 assure l'étanchéité entre le bord supérieur 25 de la face 20 d'un élément 16 d'écran intermédiaire et le bord libre de la bande cintrée 24 de l'élément 16 d'écran intermédiaire immédiatement supérieur, par rapport à la pente du toit. La rainure 23 et la bande cintrée 24 sont en appui sur les contre-liteaux 3. Ainsi, la hauteur de l'espace d'aspiration est au moins égale à la hauteur des contre-liteaux 3.

Sur la figure 4, un élément 16 d'écran intermédiaire a été découpé pour montrer un orifice 17 dans l'écran de sous-toiture 2, constituant le point de départ de la gaine d'aspiration 9.

L'écran intermédiaire 15, disposé en regard de l'orifice 17 d'aspiration de la gaine 9, empêche l'aspiration d'air à travers le toit. Plus l'écran intermédiaire est de grandes dimensions, plus il est efficace. De manière avantageuse, il s'étend jusqu'aux bords du pan de toit. Il permet d'aller chercher l'air aspiré, sur la plus grande surface disponible de toiture. L'écran intermédiaire 15 est en matériau conducteur, en métal léger ou en composite, avantageusement de couleur sombre, ou même noire, de sorte qu'il participe au chauffage de l'air aspiré, pendant le trajet de l'air des bords de l'écran intermédiaire 15 jusqu'à l'orifice 17 d'aspiration. Pour favoriser l'échange thermique entre l'écran intermédiaire 15 et l'air aspiré, une turbulence est recherchée dans l'espace d'aspiration. A cet effet, l'écran intermédiaire 15 est pourvu de reliefs tels que les pans obliques 21 et les rainures 23 qui ajoutent à l'effet des liteaux 4. Par ailleurs, l'espace de circulation d'air compris entre l'écran intermédiaire 15 et les éléments de couverture 5 assure la ventilation de la sous-face des éléments de couverture.

Dans le cas où l'écran intermédiaire 15 s'étend jusqu'au bord inférieur du toit, il est avantageux d'installer en bordure de toit des moyens de réglage des ouvertures d'entrée dans l'espace d'aspiration, constituant ainsi un dispositif d'équilibrage et d'homogénéisation de l'aspiration de l'air chauffé aspiré par la gaine 9.

L'air de l'espace d'aspiration, préchauffé par les apports solaires sur les éléments de couverture et par les apports induits sur l'écran intermédiaire, est aspiré par la gaine 9. Cet air préchauffé, est transmis par la gaine 9 à une installation de récupération de chaleur qui est avantageusement logée sous le toit, par exemple dans un comble. Ainsi la gaine d'aspiration d'air, d'une part est courte, d'autre part ne traverse pas de locaux d'habitation. L'installation de récupération de chaleur comporte de préférence une pompe à chaleur dont la source froide est alimentée par la gaine d'aspiration. De la sorte, seules les canalisations d'eau chaude passent dans les locaux d'habitation. Avantageusement, l'aspiration d'air par la gaine 9 est pilotée par un logiciel pour optimiser la performance énergétique de l'installation de récupération de chaleur.

## Revendications

1. Système de récupération des apports solaires, sur une toiture traditionnelle en pente comportant des chevrons (1), un écran de sous-toiture (2), des contre-liteaux (3) maintenant l'écran de sous-toiture sur les chevrons, des liteaux (4) perpendiculaires aux chevrons et contre-liteaux, et des éléments de couverture (5) ; le système de récupération des apports solaires comprenant au moins une gaine d'aspiration (9) débouchant dans un orifice (17) de l'écran de sous-toiture et aboutissant à une installation de récupération de chaleur, **caractérisé en ce qu'il** comporte, entre l'écran de sous-toiture et les éléments de couverture, un écran intermédiaire (15) présentant une surface sensiblement continue et étanche, et délimitant d'une part, un espace de circulation d'air au-dessous des éléments de couverture pour assurer la ventilation naturelle des éléments de couverture, et d'autre part, un espace d'aspiration d'air au-dessus de l'écran de sous-toiture pour assurer la circulation d'air chauffé depuis les bords de l'écran intermédiaire jusqu'à l'orifice dans l'écran de sous-toiture.

2. Système de récupération des apports solaires selon la revendication 1, **caractérisé en ce que** l'écran intermédiaire (15) s'étend au moins sous une partie des éléments de couverture (5).

3. Système de récupération des apports solaires selon la revendication 2, **caractérisé en ce que** ladite au moins une gaine d'aspiration (9) débouche dans l'orifice (17) de l'écran de sous-toiture en regard de l'écran intermédiaire (15).

4. Système de récupération des apports solaires selon la revendication 1, **caractérisé en ce que** l'écran intermédiaire (15) est en matériau conducteur et participe au chauffage de l'air pendant son trajet depuis le bord de l'écran intermédiaire jusqu'à l'orifice de l'écran de sous-toiture.

5. Système de récupération des apports solaires selon la revendication 1, **caractérisé en ce que** l'écran intermédiaire (15) est constitué d'éléments (16) fixés aux liteaux et s'appuyant sur les contre-liteaux.

6. Système de récupération des apports solaires selon la revendication 5, **caractérisé en ce que** les éléments (16) constitutifs de l'écran intermédiaire (15) présentent un relief pour assurer une turbulence de l'air aspiré par la gaine, pour favoriser l'échange thermique entre l'air aspiré et l'écran intermédiaire.

7. Système de récupération des apports solaires selon la revendication 1, **caractérisé en ce que** l'installation de récupération de chaleur est logée sous la toiture.

8. Système de récupération des apports solaires selon la revendication 1, **caractérisé en ce que** entre l'espace d'aspiration et l'installation de récupération de chaleur est disposé un clapet anti-retour piloté pour contrôler le débit d'air chaud aspiré.
